(19) Europäisches Patentamt

European Patent Office

Office européen des brevets

(11) **EP 0 816 805 B1**

(12) **EUROPEAN PATENT SPECIFICATION**

(45) Date of publication and mention
of the grant of the patent:
**03.03.2004 Bulletin 2004/10**

(51) Int Cl.[7]: **G01D 5/241**, G01D 5/16

(21) Application number: **97110428.6**

(22) Date of filing: **25.06.1997**

(54) **Sensor circuit**

Sensorschaltung

Circuit pour capteur

(84) Designated Contracting States:
**DE FR GB**

(30) Priority: **26.06.1996 JP 18558496**

(43) Date of publication of application:
**07.01.1998 Bulletin 1998/02**

(60) Divisional application:
**02018221.8 / 1 271 106**

(73) Proprietor: **Tokyo Electron Ltd.**
**Tokyo 107-8481 (JP)**

(72) Inventors:
  • **Shou, Guoliang, c/o Yozan Inc.**
    **Tokyo 155 (JP)**
  • **Motohashi, Kazunori, c/o Yozan Inc.**
    **Tokyo 155 (JP)**
  • **Lin, Shengmin, c/o Yozan Inc.**
    **Tokyo 155 (JP)**
  • **Yamamoto, Makoto, c/o Yozan Inc.**
    **Tokyo 155 (JP)**
  • **Matsumoto, Toshiyuki,**
    **Hyogo-ken, 669-13 (JP)**
  • **Harada, Muneo,**
    **Hyogo-ken, 663 (JP)**
  • **Ooasa, Takahiko,**
    **Nara-ken, 630-02 (JP)**
  • **Hirota, Yoshihiro**
    **Kyoto, 606 (JP)**

(74) Representative: **Grünecker, Kinkeldey,**
**Stockmair & Schwanhäusser Anwaltssozietät**
**Maximilianstrasse 58**
**80538 München (DE)**

(56) References cited:
**EP-A- 0 455 070       EP-A- 0 707 275**
**US-A- 4 572 900       US-A- 5 424 973**

• **HABEKOTTE ET AL: "smart digital-readout**
**circuit for a capacitive microtransducer" IEEE**
**MICRO., vol. 4, no. 5, October 1984, NEW YORK**
**US, pages 44-54, XP002041050**
• **PATENT ABSTRACTS OF JAPAN vol. 013, no.**
**215 (P-874), 19 May 1989 & JP 01 032161 A**
**(DAIKIN IND LTD), 2 February 1989,**

## EP 0 816 805 B1

**Description**

The present invention relates to sensor circuits, especially one for electrically detecting characteristic changes as capacitance values.

A differential-type sensor such as a differential transformer can possess high sensitivity using contrary outputs of elements. For example, a sensor using a strain gauges can generates improved output when those gauges are attached on positions where strains are generated in reverse direction. Such sensor output is often used after amplifying by operational amplifier.

Recently, various and extensive sensor information must be processed, from computer control of vehicular fuel consumption, and ecology also requires reduced electric power consumption. It is demanded of a sensor circuit that it be small-sized and use reduced electric power for processing signals and realizing high sensitivity. (Reference: "Sensor Electronics", Kiyoshi TAKAHASHI, et al., Shokodo, 1984).

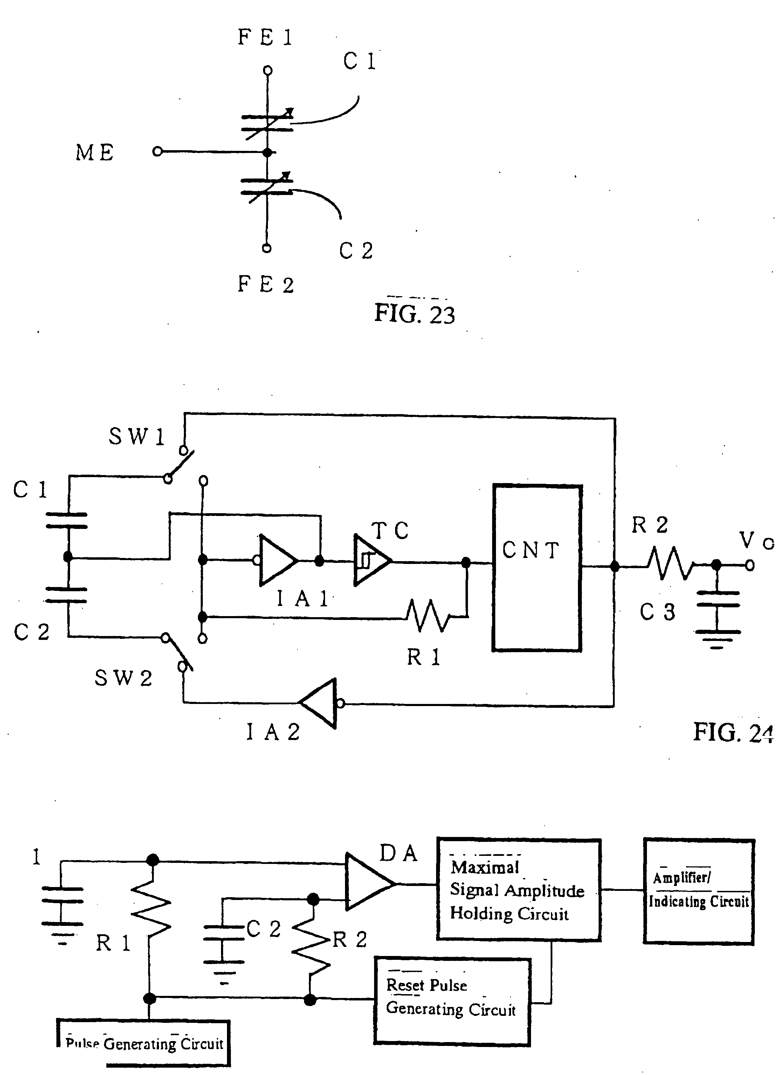

FIG. 24 shows a capacitive sensor circuit of a conventional sensor as disclosed in Japanese Patent Laid-Open Publication No. 56-166411, in which an integral circuit is structured by resistor R1 and capacitive sensor C1, a pulse is generated corresponding to the change of C1 and counted by counter CNT, and the output of CNT is converted into a voltage value by an integrating circuit.

FIG. 25 shows another capacitive sensor circuit of a conventional sensor as disclosed in Japanese Patent Publication No. 2-22338, in which a predetermined pulse in input to the first integrating circuit including resistor R2 and capacitive sensor C2, and to the second integrating circuit including resistor R1 and capacitor C1, and then the difference between them is output as a voltage signal, and the change of C2 is detected by the output.

The above sensor circuits consumes a lot of electric power because they constantly invariably generate pulses. Also, they need complicated signal processing circuits like counter circuits, differential amplifying circuits, and pulse generating circuits. The resulting large circuit size makes it difficult to combine them with sensors.

EP-A-0 455 070 describes a capacitive sensor having a frequency output. The sensor comprises an uneven number of converters forming a ring oscillator and a plurality of capacitors having a capacity adapted to a unit to be measured. Furthermore, each of the plurality of capacitors is arranged between ground and the input of the associated inverter. Thereby, the capacities of the plurality of capacitors determine the frequency of the sensor.

In view of the above prior art the present invention has an object to provide a small-size sensor circuit for reducing electric power consumption.

This object is solved by the subject matter of the independent claims. Preferred embodiments of the invention are described with dependent claims.

A sensor circuits according to the present invention uses a pair of capacitors, with contrary characteristics given to a pair of impedances. Each pair of impedances is connected to the input of a CMOS inverting amplifier with an odd number of inverters and to the midpoint of its input and output. This kind of connection gives a closed loop-gain to the relationship between the input and the output of the CMOS inverting amplifier according to the impedance changes.

Otherwise, one of the pair of impedances is connected to a CMOS inverting amplifier made of an odd number of inverters including feedback impedance, so as to combine the output of the CMOS inverting amplifier and another impedance by a capacitive coupling.

FIG. 1 shows a conceptual diagram of a sensor circuit according to the present invention.

FIG. 2 shows a block diagram of a sensor circuit.

FIG. 3 shows another block diagram of a sensor circuit.

FIG. 4 shows a concrete example of the circuit in FIG. 3.

FIG. 5 shows another concrete example of the circuit in FIG. 3.

FIG. 6 shows the first example of a sensor circuit.

FIG. 7 shows a CMOS inverter.

FIG. 8 shows the second example of a sensor circuit.

FIG. 9 shows the third example of a sensor circuit.

FIG. 10 shows the fourth example of a sensor circuit.

FIG. 11 shows the fifth example of a sensor circuit.

FIG. 12 shows the sixth example of a sensor circuit.

FIG. 13 shows the seventh example of a sensor circuit.

FIG. 14 shows the eighth example of a sensor circuit.

FIG. 15 shows the ninth example of a sensor circuit.

FIG. 16 shows the tenth example of a sensor circuit.

FIG. 17 shows the eleventh example of a sensor circuit.

FIG. 18 shows the twelfth example of a sensor circuit.

FIG. 19 shows the thirteenth example of a sensor circuit.

FIG. 20 shows a vertical section of a sensor circuit.

FIG. 21 shows a circuit equivalent to the sensor circuit in FIG. 20

FIG. 22 shows a vertical section of another sensor circuit.

FIG. 23 shows a circuit equivalent to the sensor circuit in FIG. 22.

FIG. 24 shows a conventional sensor circuit.

FIG. 25 shows another conventional sensor circuit.

Hereinafter, a sensor circuit is described with reference to the attached drawings.

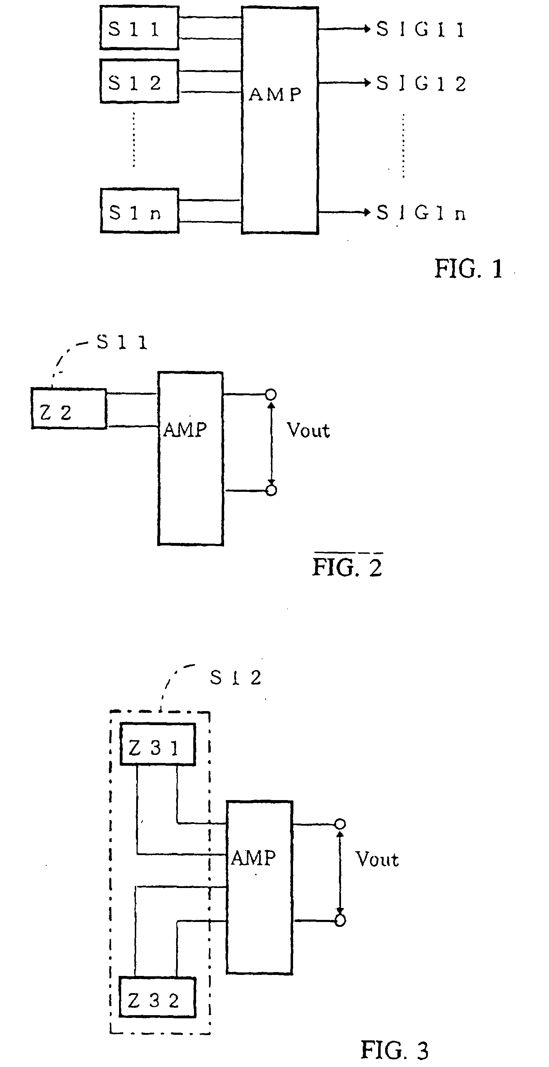

In FIG. 1, the sensor circuit includes amplifying circuit AMP, to which a plurality of sensors S11 to S1n are connected, and from which output signals SIG11 to SIG1n corresponding to each sensor are output.

The sensor can be one of two kinds. FIG. 2 shows the first type, sensor S11 with impedance Z2 connected to AMP. Output voltage Vout corresponding to the characteristic change of Z2 is output from AMP.

FIG. 3 shows the second type, sensor S12 with a pair of impedances Z31 and Z32 parallely connected to AMP. To each of this pair, a contrary characteristic change is given. High-accuracy detection is possible by comparing the contrary characteristic changes, and the detected result is output from AMP as Vout.

For example, contrary characteristic changes occur in the cases below.

(1) A strain gauge is added to each compressing and tensing side of a leaf-spring detecting means (p242 in the reference);

(2) Sensing system of strain gauges are attached on center and edge portions of a diaphragm for detecting pressure, (p140 in the reference);

(3) Linear Variable Differential Transformer (p143 to p145 in the reference);

(4) Sensing system with a pair of Hall elements placed in a straight array which can cause the change of their resistance value due to moving of a permanent magnet fixed on the object to be measured (p127 and 128 in the reference);

(5) Sensing system with electrodes that are arrayed on both sides of the diaphragm of a high-accuracy capacitive pressure gauge in which the change of the capacity between each electrode and the diaphragm is detected by a half-bridge circuit (p142 in the reference).

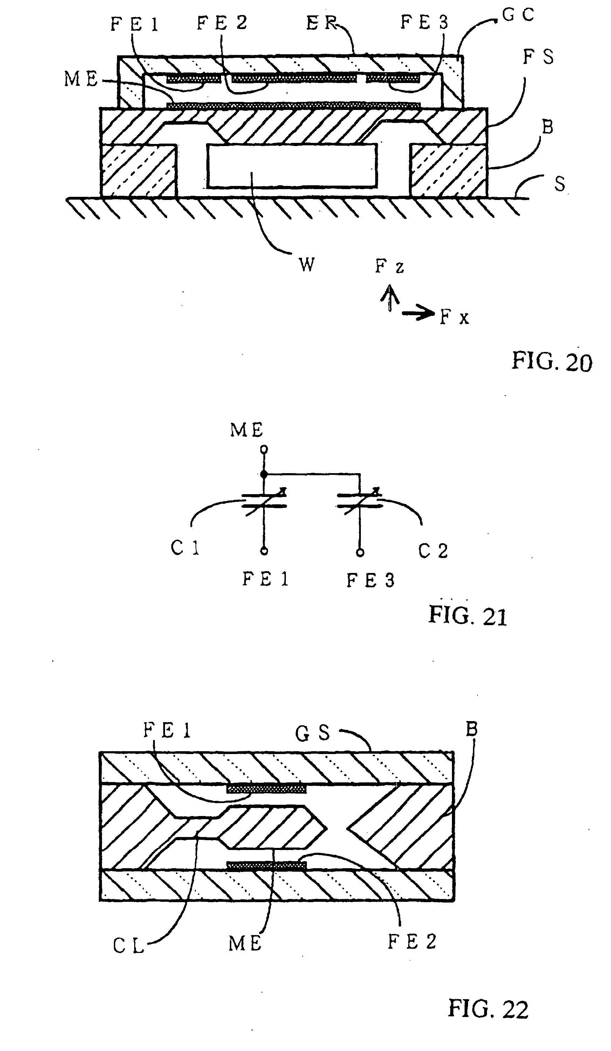

(6) An acceleration sensor in FIG. 20 is disclosed in "Development of Triaxial Accelerometers Using Piezoresistance, Electrostatic Capacitance and Piezoelectric Elements", K. OKADA, Technical Digest of the 13th Sensor Symposium, 1995, p169 to 172. In this sensor, fixed electrodes FE1, FE2 and FE3 are located facing movable electrode ME. ME is deformed according to the displacement of weight W caused by acceleration, and the capacitance value between each fixed electrode and movable electrode is measured. The equivalent circuit of an acceleration sensor is a parallel changeable capacitor shown in FIG. 21, in which changeable capacitor C1 including movable electrode ME and fixed electrode FE1, and changeable capacitor C2 including ME and fixed electrode FE3, are parallely connected. When acceleration generates in the sensor in the array direction of FE1 and FE3 (Fx direction in FIG. 20), contrary capacitance changes occur in C1 and C2 to increase the capacitance value of one of the two and decrease that of the other. In FIG. 20, S and FS are silicon substrates, B is a glass leg and GC is a glass cover.

(7) In an acceleration sensor in FIG. 22, movable capacitors are formed between movable electrode ME set at the tip of cantilever CL and each fixed electrode FE1 and FE2, respectively set above and below ME. As shown in FIG. 23, the equivalent circuit of an acceleration sensor is a serial circuit including changeable capacitors C1 and C2. Contrary capacitance changes occur in C1 and C2 by displacement of ME caused by upward and downward acceleration in FIG. 22. In FIG. 22, B is a silicon base and GS is a glass cover.

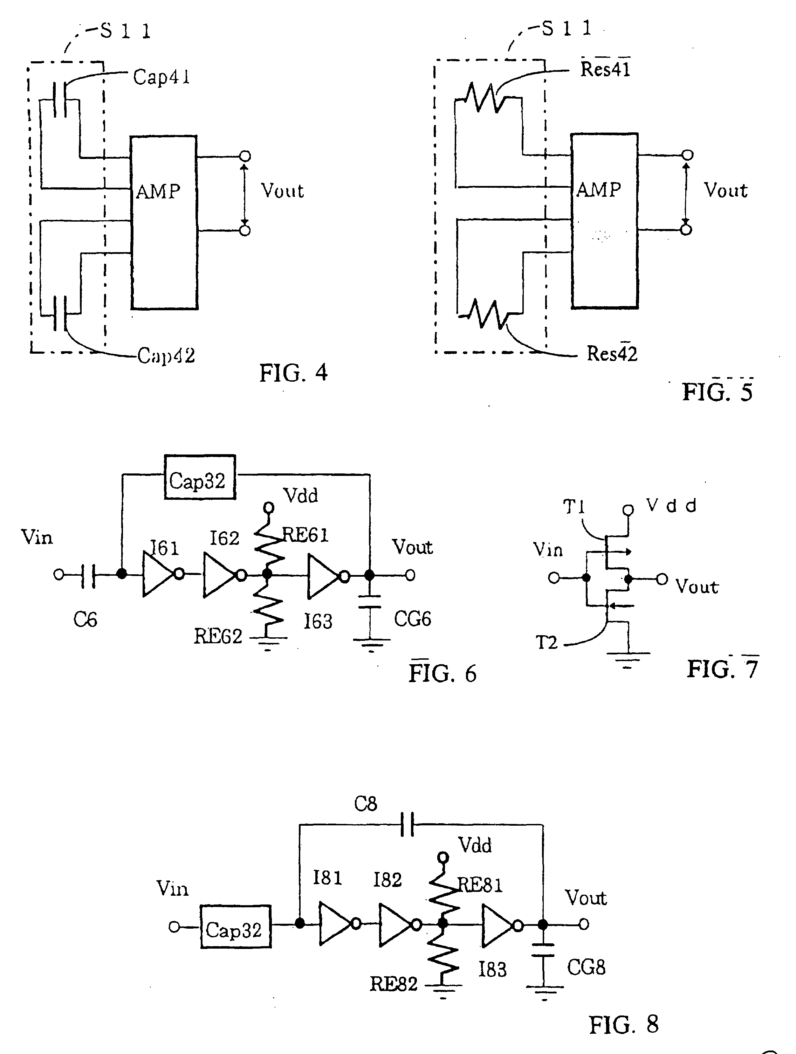

The impedances in FIG. 3 are a pair of capacitors Cap41 and Cap42 as shown in FIG. 4, or a pair of resistors Res41 and Res42 as shown in FIG. 5.

FIG. 6 shows the structure using a capacitor as the impedance in FIG. 2. In FIG. 6, capacitor Cap32 is connected as a capacitive sensor between input and output of an inverting amplifier including CMOS inverters I61 to I63 in three-stage array. To the input of the inverting amplifier, input capacitor C6 is connected. Input voltage Vin is connected to C6, and output voltage Vout is output from I63. The inverting amplifying means is guaranteed to have good linear characteristics of the relationship between input and output due to the configuration including feedback loop and high open loop-gain of I61 to I63. Assuming the threshold voltage of the inverting amplifier is Vb, the relationship between input and output is expressed by formula (1):

$$Vout - Vb = -\frac{C6}{Cap32}(Vin - Vb) \tag{1}$$

CMOS inverters I61 to I63 are structured as in FIG. 7. The drain of n-type MOS transistor T2 is connected to the drain of p-type MOS transistor T1, a common input voltage Vin is connected to the gates of T1 and T2, and high and low voltage are connected, respectively, to the sources of T1 and T2. Output voltage Vout of the CMOS inverters is output from the drains of T1 and T2.

FIG. 8 shows the second example with a capacitor serving as an impedance. In FIG. 8, feedback capacitor C8 is connected between the input and output of the inverting amplifier including CMOS inverters I81 to I83 in three-stage array. To the input of the inverting amplifier, capacitor Cap32 is connected as a capacitive sensor. Input voltage Vin is connected to Cap32, and output voltage Vout is output from I83. Similar to the circuit in FIG. 6, the relationship between the input and output in the inverting amplifier is guaranteed to have good linearity. Assuming the threshold voltage of the CMOS inverters to be Vb, the relationship between the input and output is expressed in formula (2):

$$Vout - Vb = -\frac{Cap32}{C8}(Vin - Vb) \tag{2}$$

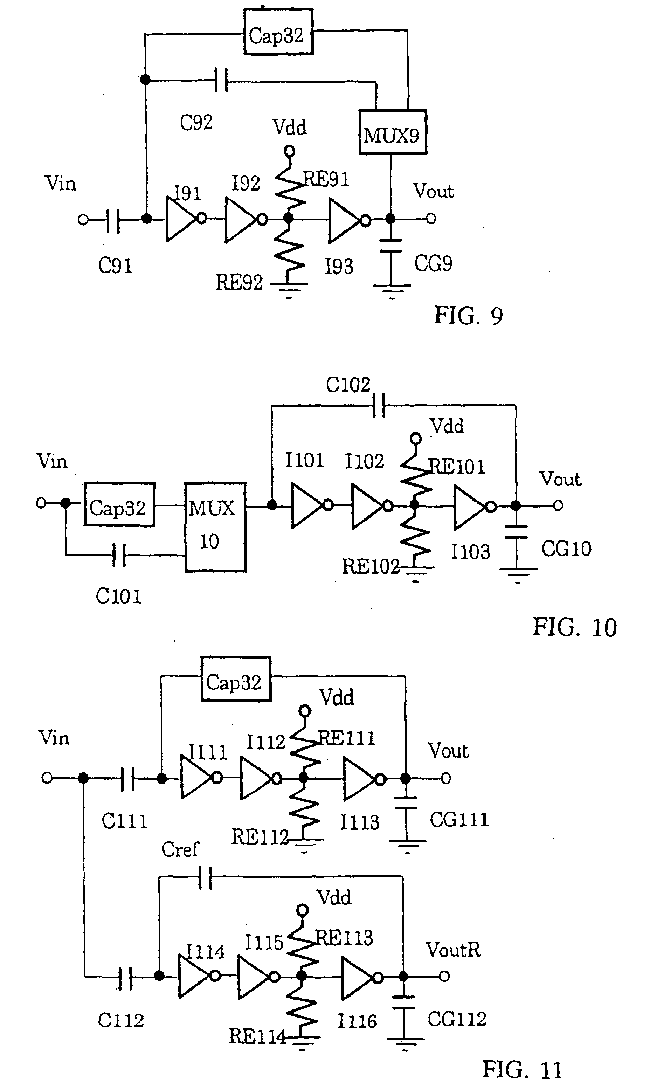

FIG. 9 shows the structure with reference capacitor C92 that is added to the structure in FIG. 6. To the input of the inverting amplifier including CMOS inverters I91 to I93, input capacitor C91 is independently connected, and reference capacitor C92 is connected parallel to Cap32. Cap32 and C92 are connected to the output of the inverting amplifier through multiplexer MUX9. To the output of the inverting amplifier, Cap32 is selectively connected when a usual sensor is activated and C92 is selectively connected for confirming the reference condition. Although MUX9 may be located at the input of the inverting amplifier, an output of the inverting amplifier is preferable as connecting point when the influence on C91 is considered. When equation (1) is not effective, for example, because of stored electric charge in Cap32, the measurement can be corrected by cutting off Cap32 and connecting C92. This results in constant values of output voltage due to the known value of capacitor.

FIG. 10 shows the structure when reference capacitor C101 is added to the structure in FIG. 8. Between input and output of the inverting amplifier including CMOS inverters I101 to I103 in three-stage array, feedback capacitor C102 is connected, and to the input of the inverting amplifier, reference capacitor C101 is connected through MUX10 parallelly to Cap32. Cap32 is selectively connected to the inverting amplifier when a usual sensor is activated, and C101 is selectively connected for confirming the reference condition. When equation (2) is not effective, for example, because of electric charge in Cap32, the measurement can be corrected by cutting off Cap32 and connecting C101. This generates constant value of output voltage due to the known value of capacitor.

In FIG. 11, the circuit in FIG. 6 is set in pairs, where one feedback capacitor is replaced by a reference capacitor. In the first circuit, the inverting amplifier including CMOS inverters I111 to I113 in three stage-array is connected to capacitive sensor Cap32, and input capacitor C111 is connected to the input of the inverting amplifier. In the second circuit, input and output of the inverting amplifier including CMOS inverters I114 to I116 in three-stages array are connected to reference capacitor Cref, and input capacitor C112 is connected to the input of the inverting amplifier. To input capacitors C111 and C112, common input voltage Vin is connected. The first circuit's output voltage Vout is a sensor-measured result of the sensor, and the second circuit's output voltage VoutR is the reference voltage of the reference capacitor. Measurement of the sensor can be executed through constant observation of the reference output in this structure.

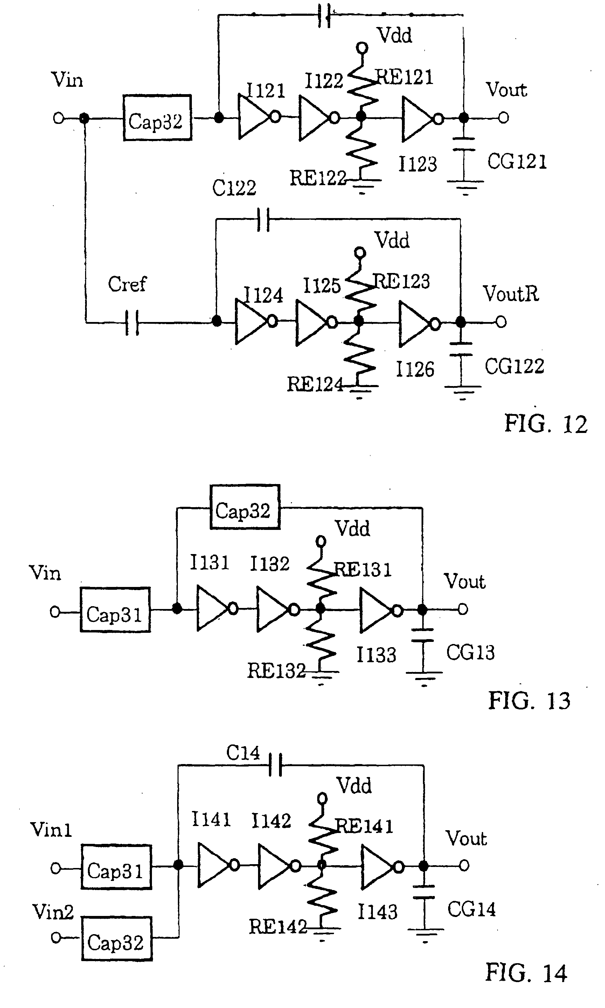

In FIG. 12, the circuit in FIG. 8 is set in pairs, where one input capacitor is replaced by a reference capacitor. In the first circuit, the inverting amplifier including CMOS inverters I121 to I123 on three-stage array has a feedback capacitor C121, and capacitor Cap32 is connected to the input of the inverting amplifier as a capacitive sensor. In the second circuit, input and output of the inverting amplifier including CMOS inverters I124 to I126 in three-stage array has a feedback capacitor C122, and reference capacitor Cref is connected to the input of the inverting amplifier. To the input of Cap32 and Cref, the common input voltage Vin is connected. The first circuit's output voltage Vout is a sensor-measured result, and the second circuit's output voltage VoutR is the reference voltage of the reference capacitor. Measurement can be executed through constant observation of the reference outputs in this structure.

FIG. 13 shows a sensor circuit using capacitive sensors Cap31 and Cap32, where input and output of the inverting amplifier including CMOS inverters I131 to I133 in three-stage array are connected to Cap32, and Cap31 is connected to the input of the inverting amplifier. Assuming that the input voltage of Cap31 is Vin, and the output voltage of the inverting amplifier is Vout, the relationship between the inputs and outputs is expressed in formula (3);

$$Vout - Vb = -\frac{Cap31}{Cap32}(Vin - Vb) \tag{3}$$

Formula (3) stipulates the output voltage is proportional to the ratio of Cap31 to Cap32. When Cap31 and Cap32 change contrarily, the change is output through amplification.

FIG. 14 shows a sensor circuit using two capacitive sensors Cap31 and Cap32, where the input and output of the inverting amplifier including CMOS inverters I141 to I143 in three-stage array are connected to feedback capacitor C14, and Cap31 and Cap32 are parallelly connected to the input of the inverting amplifier. Assuming that the input voltage of Cap31 is Vin1, that of Cap32 is Vin2, and the output voltage of the inverting amplifier is Vout, the relationship between the input and output of this circuit is shown in formula (4):

$$Vout - Vb = \frac{Cap31 \cdot (Vin1 - Vb) + Cap32 \cdot (Vin2 - Vb)}{C14} \tag{4}$$

Formula (4) stipulates the output voltage is proportional to the sum of Cap31 and Cap32, which are multiplied by their input voltages, respectively. This will be effective to integrate the dispersed measurement values.

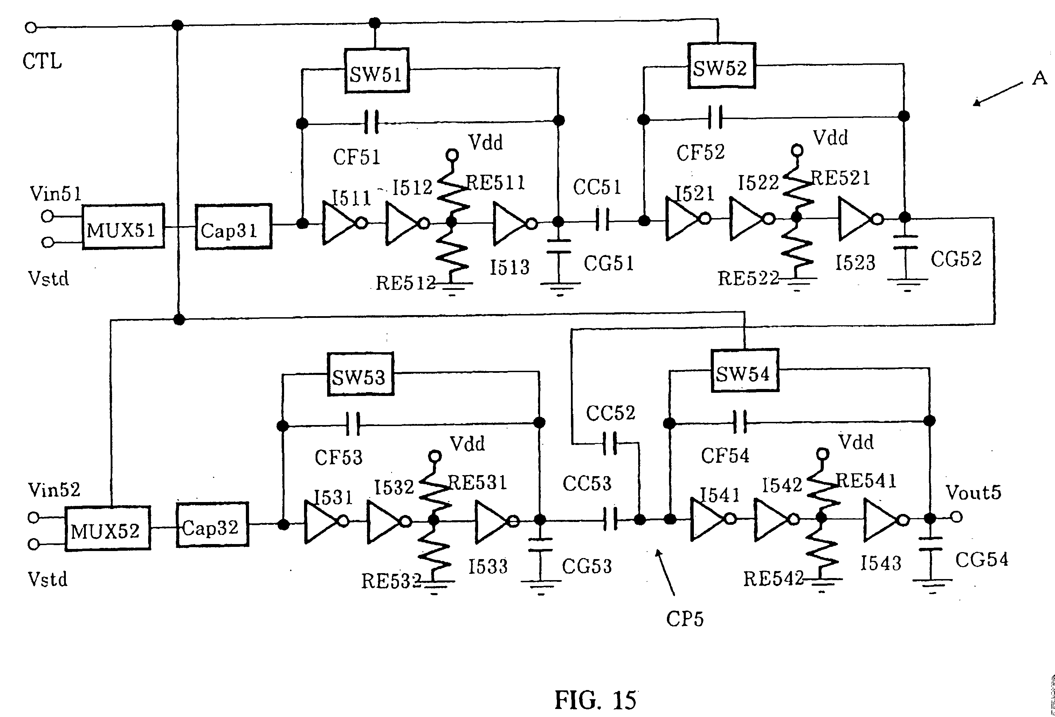

In FIG. 15, Cap31 and Cap32 are respectively connected to the inputs of CMOS inverters I511 to I513, and I531 to I533, both in three-stage array. The output of I513 is input to I511 through feedback capacitor CF51 so that the inverting output of Cap31 is generated with good linearity at the output of I513 due to the high open loop-gains of I511 to I513. The output of I533 is input to I531 through feedback capacitor CF53 so that the inverting output of Cap32 is generated with good linearity at the output of I533 due to the high open loop-gains of I531 to I533.

Through coupling capacitor CC51, the output of I513 is connected to CMOS inverters I521 to I523 in three stages, whose output is input to I521 through feedback capacitor CF52. The output of I513 is again inverted by it, and so the output of Cap31 reverts to a state of non-conversion. The outputs of I523 and I533 are respectively connected to capacitors CC52 and CC53, whose outputs are added and make capacitive coupling CP5.

The output of CP5 is connected to the input of CMOS inverters I541 to I543 in three-stage array, and their output is input to I541 through feedback capacitor CF54 so that the inverting output of CP5 is generated with good linearity at the output of I543 by the high open loop-gains of I541 to I543.

Assuming that the input voltages of Cap31 and Cap32 are Vin51 and Vin52, respectively, and the threshold voltage of CMOS inverter is Vb, output voltage Vout5 of the output of I543 is expressed by formula (5):

$$Vout5 - Vb = -\frac{Cap31 \cdot CC51 \cdot CC52}{CF51 \cdot CF52 \cdot Cf54}(Vin51 - Vb) + \frac{Cap32 \cdot CC53}{CF53 \cdot CF54}(Vin52 - Vb) \tag{5}$$

The conditions below are based on the capacitance ratio and the input voltage:

$$CC51 = CF52 \tag{6}$$

$$CC52 = CC53 = CF54/2 \tag{7}$$

$$CF51 = CF53 \tag{8}$$

$$Vin51 = Vin52 = V \tag{9}$$

Voltage V in formula (9) has a known value of voltage supplied from outside. When CF51=CF53=C0, formula (5) is changed into formula (10):

$$Vout5 - Vb = \frac{1}{2C0}(V - Vb)(Cap32 - Cap31) \tag{10}$$

Therefore, the changes of Cap32 and Cap31 are detected as their difference as shown in formula (11). When contrary changes occur to them, the changed quantity can be detected by amplifying it twice. The gain can be appropriately adjusted by changing the values of C0 and V:

$$Cap32 - Cap31 = \frac{2C0(Vout5 - Vb)}{V - Vb}. \tag{11}$$

In the above circuit, the outputs of the last stages (output stages) of each three-stage CMOS inverters I63, I83, I93, I103, I103, I116, I123, I126, I133, I143, I513, I523, I533 and I543, are respectively connected to the following grounded capacitors serving as low-pass filters: CG6, CG8, CG9, CG10, CG111, CG112, CG121, CG122, CG13, CG14, CG51, CG52, CG53 and CG54. To the outputs of the intermediate stages I62, I82, I92, I102, I112, I115, I122, I125, I132, I142, I512, I522, I532 and I542, the following balancing resistors to control gains are respectively connected: RE61 and RE62, RE81 and RE82, RE91 and RE92, RE101 and RE102, RE111 and RE112, RE113 and RE114, RE121 and RE122, RE123 and RE124, RE131 and RE132, RE141 and RE142 , RE511 and RE512, RE521 and RE522, RE531 and RE532, and RE541 and RE542, RE511, RE521, RE531 and RE541 are connected to supply voltage Vdd, and RE512, RE522, RE532 and RE542 are grounded. These structures prevent oscillation within the inverting amplifying circuits including feedback circuits.

Both inputs and outputs of CF51, CF52, CF53 and CF54 are respectively connected to switches SW51, SW52, SW53 and SW54, which are able to be open and closed. To Cap31 and Cap32, reference voltage Vstd can be input instead of input voltages Vin51 and Vin52 through multiplexers MUX51 and MUX52, respectively. It is possible to reduce the residual charge in Cap31 and Cap32 by closing the switches at the same time and connecting Vstd to Cap31 and Cap32. As the residual charge generates offset voltage in output voltage, the refreshment through charge reduction prevents the outputs from lowering in accuracy. Control signal CTL is set, for example, to 1 (high level) for refreshment and to 0 (low level) for normal measurement.

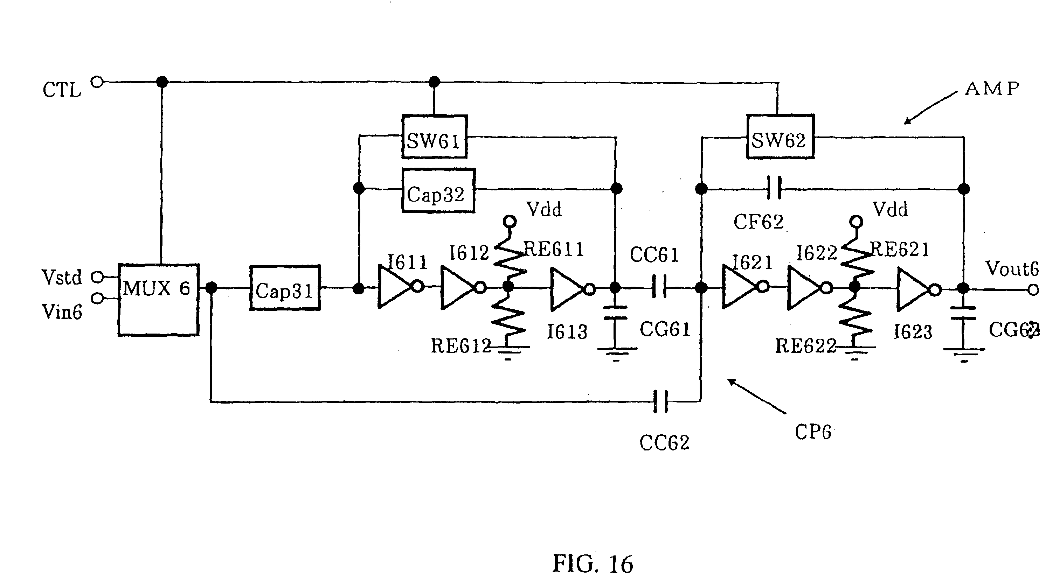

FIG. 16 shows an example of amplifying circuit AMP in which Cap31 is connected to the input of CMOS inverters I611 to I613 in three-stage array, and Cap32 is connected between the output of I613 and the input of I611 as a feedback capacitor. To Cap31, input voltage Vin6 is input through multiplexer MUX6, and the inverting output of Vin6 is generated at the output of I613 with linear characteristics. To the output of I613, CMOS inverters I621 to I623 in three-stage array are connected through coupling capacitor CC61. The output of I623 is input to I621 through feedback capacitor CF62. The output of I613 is reinverting by such a structure, and so the output of I623 reverts to a non-inverting state.

The output of MUX6 is connected to I621 through coupling capacitor CC62. Consequently, the inverting output of I613 and Vin6 are added, and when the threshold voltage of the CMOS inverters is Vb, Vout6 as the output of I623 is expressed in formula (12):

$$Vout6 - Vb = \frac{\frac{Cap31}{Cap\,32} \cdot CC61 - CC62}{CF62}(Vin6 - Vb) \tag{12}$$

Formula (13) shows the condition on the capacitance ratio:

$$CC61 = CC62 = CF62 \tag{13}$$

To Vin6, the known input value of voltage is supplied similar in formula (10).

$$Vin6 = V \tag{14}$$

Therefore, formula (12) is translated to formula (15):

$$Vout6 - Vb = \left(\frac{Cap31}{Cap32} - 1\right)(V - Vb)$$

$$\tag{15}$$

As shown in formula (15), the changes of Cap32 and Cap31 are detected as the ratio between them. When contrary changes occur to them, the changed quantity can be detected by amplifying it twice. The gain can be appropriately adjusted according to the ratio by setting $CC61 \neq CF62$ or by changing the value of V.

Also in this embodiment, grounded capacitors CG61 and CG62 for preventing oscillations, and balancing resistors RE611 and RE612, and RE621 and RE622 are included. Between the inputs and outputs of Cap32 and CF62, refreshing switches SW61 and SW62 are connected, respectively. To MUX6, Vstd is input and then sent to Cap31 to be refreshed. As Vstd=Vb, and the input of I611 is also Vb, Cap31 is thus refreshed. Refreshing process is executed by control signal CTL as shown in FIG. 15.

Though Vstd in FIG. 16 is generated outside of AMP or the integrated circuit, voltage Vb in AMP can be used because Vstd is set equal to Vb.

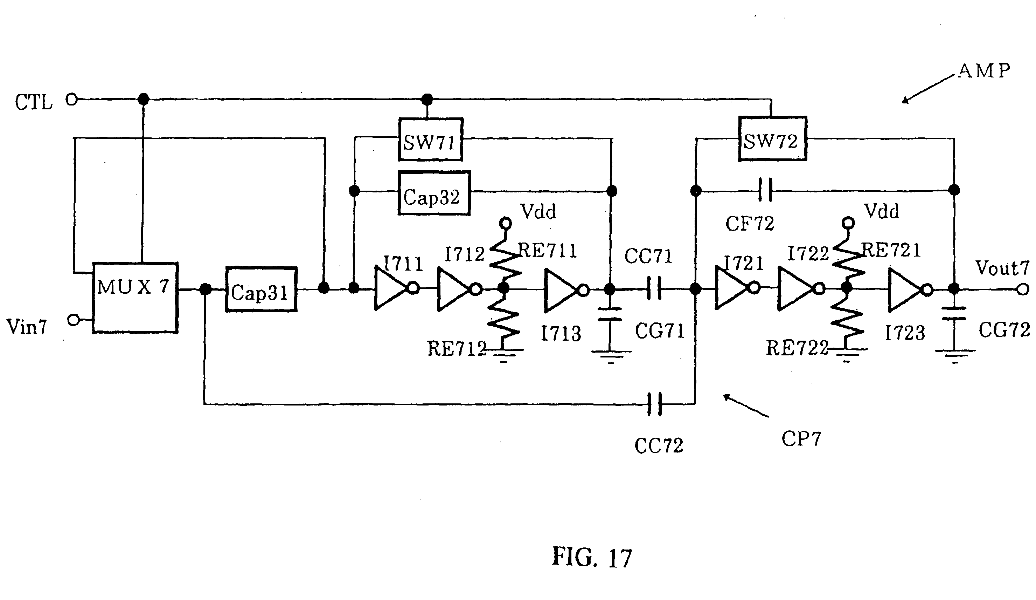

FIG. 17 shows a change in Vstd as a variation of FIG. 16. All components numbered 6 in FIG. 16 are renumbered 7 in FIG. 17. In FIG. 17, to the input of multiplexer MUX7, an input of I711 (an output of Cap31) is connected instead of Vstd. It short-cuts Cap31, which means that Cap31 can be refreshed. Not using Vstd from outside avoids the need for a circuit to generate it.

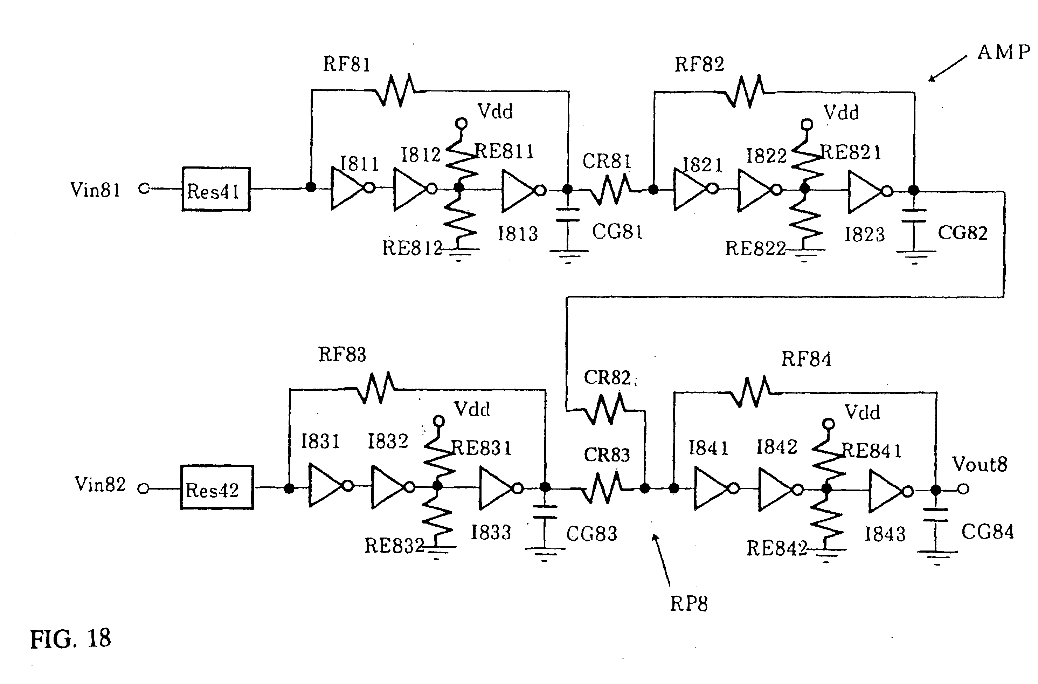

FIG. 18 shows an example of amplifying circuit AMP using resistors Res41 and Res42 as impedances.

In FIG. 18, Res41 is connected to the input of CMOS inverters I811 to I813 in three-stage array and Res42 is connected to the input of CMOS inverters I831 to I833 in similar array. The output of I813 is input to I811 through feedback resistor RF81, and so the inverting output of Res41 is generated with good linearity at the output of I813 due to the high open loop-gains of I831 to I833.

To the output of I813, CMOS inverters I821 to I823 in three-stage array are connected through coupling resistor CR81, and the output of I823 is input to I821 through feedback resistance RF82. By such a structure, the output of I813 undergoes inversion again and so the output of Res41 is reverts to non-inversion state. The output of I823 and I833 is respectively connected to resistors CR82 and CR83 whose output is added at and make resistive coupling RP8.

The outputs of RP8 is input to CMOS inverters I841 to I843 in three-stages array, whose output is input to I841 through feedback resistor RF84. Accordingly, the inverting output of RP8 is generated with good linearity at the output of I843 due to high loop-gains of I841 to I843.

Assuming the input voltages of Res41 and Res42 to be Vin81 and Vin82, respectively, and the threshold voltage of the CMOS inverter to be Vb, output Vout8 of I843 is expressed by formula (16):

$$Vout8 - Vb = - \frac{RF81 \cdot RF82 \cdot R84}{Re\ s41 \cdot CR81 \cdot CR83}(Vin81 - Vb) + \frac{RF83 \cdot RF84}{Re\ s42 \cdot CR82}(Vin82 - Vb) \qquad (16)$$

The equations below are conditions on the capacitance ratio and the input voltage:

$$CR81 = RF82 \qquad (17)$$

$$CR82 = CR83 = 2RF84 \qquad (18)$$

$$RF81 = RF83 \qquad (19)$$

$$Vin81 = Vin82 = V \qquad (20)$$

When RF81-RF83=R0, formula (16) is changed into formula (21):

$$Vout8 - Vb = 2R0(V - Vb)\left(\frac{1}{Re\ s42} - \frac{1}{Re\ s41}\right) \qquad (21)$$

Changes of Res41 and Rcs42 are detected as the difference of their reciprocal numbers as shown in formula (22). When contrary changes occur, the changed quantity can be detected by amplifying it twice. The gain can be adjusted by setting the values of R0 and V.

$$\frac{1}{Re\ s42} - \frac{1}{Re\ s41} = \frac{Vout8 - Vb}{2R0(V - Vb)} \qquad (22)$$

Similar to the above examples, oscillation is prevented by connecting each grounded capacitor CG81, CG82, CG83 and CG84 to the last stage of each three stages of CMOS inverter, and providing each balancing resistor RE811 and RE812, RE821 and RE822, RE831 and RE832, and RE841 and RE842 to the second stage. In a circuit having a resistor as an elementary component, refreshment is not requisite because no residual charge is generated.

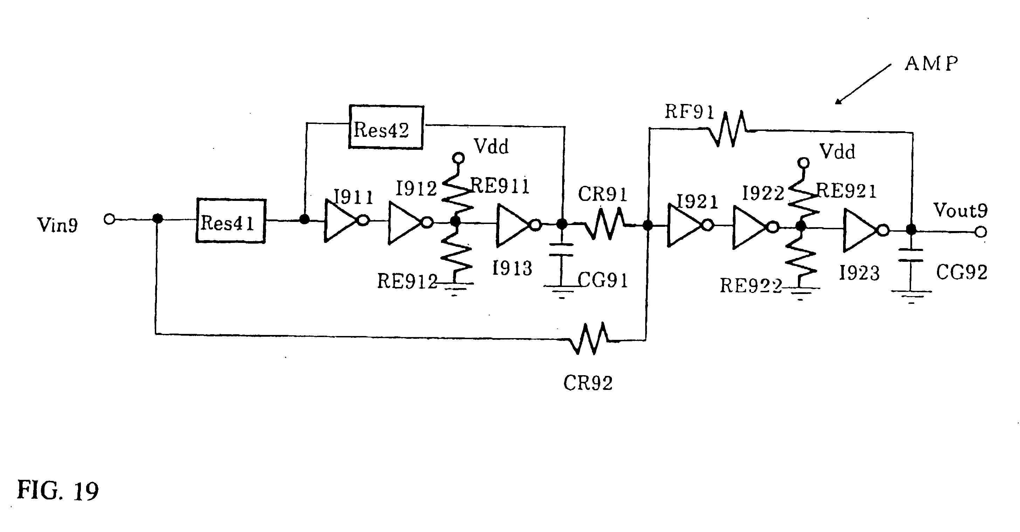

FIG. 19 shows an example of amplifying circuit AMP, where Res41 is connected to the input of CMOS inverters I911 to I913 in three-stage array, and Res42 is connected between the output of I913 and the input of I911 as a feedback resistor. To Res41, input voltage Vin9 is input and its inverting output is generated at the output of I913 with good linearity. To the output of I913, CMOS inverters I921 to I923 in three-stage array are connected through coupling resistor CR91. The output of I923 is input to I921 through feedback resistor RF91, which means the output of I913 is inverted again, and so the output of Res41 reverts to a non-inverting state.

Moreover, Vin9 is connected to I921 through coupling resistor CR92 and combined with the inverting output of I913. Assuming that the threshold voltage of CMOS inverter is Vb, Vout as the output of I923 is given in equation (23):

$$Vout9 - Vb = \frac{\dfrac{Re\,s42}{Re\,s41} \cdot \dfrac{1}{CR91} - \dfrac{1}{CR92}}{\dfrac{1}{RF91}}(Vin9 - Vb) \tag{23}$$

Equations (24) and (25) are adopted as the resistance ratio and the input voltage:

$$CR91 = CR92 = RF91 \tag{24}$$

$$Vin9 = V \tag{25}$$

So formula (26)is obtained:

$$Vout9 - Vb = \left(\frac{Re\,s42}{Re\,s41} - 1\right)(V - Vb) \tag{26}$$

As shown in formula (26), the changes of Res42 and Res41 are detected by their own ratio. When contrary changes occur in them, the changed quantity can be detected by amplifying it twice. The gain can be adjusted according to the ratio when CR91 ≠ CR92.

Like the above examples, oscillation is prevented by connecting grounded capacitors CG91 and CG92, balancing resistors RE911 and RE912, and RE921 and RE922.

In the above explained sensor circuit each of a pair of impedance is connected to the input of a CMOS inverting amplifier consisted of an odd number of inverters and to the midpoint of input and output. The structure gives closed loop-gain to the relationship between the input and output of this CMOS inverting amplifier according to the impedance changes. Alternatively, one of the pair of impedances is connected to a CMOS inverting amplifier consisted of an odd number of inverters with a feedback impedance, and that inverter's output and another impedance are added by a capacitive coupling. Therefore, both the circuit size and the electric power consumption can be reduced.

**Claims**

1.   A sensor circuit comprising:

i) an inverting amplifier consisting of an odd number of CMOS inverters (I81, I82, I83);

ii) a feedback capacitor (C8) for connecting the output of said inverting amplifier to its input; and

iii) an input capacitor (Cap32) connected to the input of said inverting amplifier;

wherein said input capacitor (Cap32) is a capacitive sensor.

2.   A sensor circuit according to claim 1, wherein said feedback capacitor and said input capacitor are capacitive sensors.

3. A sensor circuit as claimed in claim 1, further comprising:

   i) a reference capacitor (C101) connected to said inverting amplifier (I101,I102,I103) parallel to said input capacitor (Cap32); and

   ii) a switch (Mux10) for selectively connecting said reference capacitor (C101) and said input capacitor (Cap32) to the input of said inverting amplifying means (I101,I102,I103).

4. A sensor circuit comprising:

   i) a first sensor circuit (Cap32,I121-123,C121) according to claim 1;

   ii) a second sensor circuit including

      a) a second inverting amplifier consisting of an odd number of CMOS inverters (I124, I125, I126);

      b) a second feedback capacitor (C122) for connecting the output of said second inverting amplifier to its input; and

      c) a second input capacitor (Cref) connected to the input of said second inverting amplifier;

   wherein a common input voltage is connected to said input capacitors (Cap32, Cref) of said first and second sensor circuits, and
   said input capacitor (Cref) of the second sensor circuit is a reference capacitor.

5. A sensor circuit for giving contrary characteristic changes to a first and second capacitor, and electrically detecting said changes, comprising:

   i) a first sensor circuit (Cap31,I511-I513,CF51) according to claims 1 or 2;

   ii) a second sensor circuit (Cap32,I531-I533,CF53) according to claim 1 or 2;

   iii) a first intermediate capacitor (CC51) connected to the output of said first sensor circuit;

   iv) a third inverting amplifying means having a third inverting amplifier comprising an odd number of CMOS inverters (I521, I522, I523) connected to said intermediate capacitor (CC51), and a third feedback capacitor (CF52) for connecting the output of said third inverting amplifier to its input;

   v) a capacitive coupling (CC53, CC52) for integrating the output of said second sensor circuit and the output of said third inverting amplifying means by a parallel capacitor; and

   vi) a fourth inverting amplifying means having a fourth inverting amplifier comprising an odd number of CMOS inverters (I541, I542, I543) connected to the output of said capacitive coupling, and a fourth feedback capacitor (CF54) for connecting the output of said fourth inverting amplifier to its input.

6. A sensor circuit for detecting characteristic changes as a capacitance value, comprising:

   i) a first sensor circuit according to claim 1 or 2;

   ii) a capacitance coupling for integrating the output of a first coupling capacitor (CC61,CC71) connected to the output of said first sensor circuit and a second coupling capacitor (CC62,CC72) parallel to said first coupling capacitor (CC61,CC71) and connected to the input of said first capacitor (Cap 31); and

   iii) a second inverting amplifying means having a second inverting amplifier comprising an odd number of CMOS inverters (I621-I623,I721-I723) connected to the output of said capacitive coupling, and a feedback capacitor (CF62,CF72) for connecting the output of said second inverting amplifier to its input.

**Patentansprüche**

1. Sensorschaltung, umfassend:

   i) einen invertierenden Verstärker, bestehend aus einer ungeraden Anzahl von CMOS-Invertern (I81, I82, I83);

   ii) einen Rückkopplungskondensator (C8) zum Verbinden des Ausgang des invertierenden Verstärkers mit seinem Eingang; und

   iii) einen Eingangskondensator (Cap32), der mit dem Eingang des invertierenden Verstärkers verbunden ist;

   wobei der Eingangskondensator (Cap32) ein kapazitiver Sensor ist.

2. Sensorschaltung nach Anspruch 1, wobei der Rückkopplungskondensator und der Eingangskondensator kapazitive Sensoren sind.

3. Sensorschaltung nach Anspruch 1, ferner umfassend:

   i) einen Bezugskondensator (C101), der mit dem invertierenden Verstärker (I101, I102, I103) parallel zu dem Eingangskondensator (Cap32) verbunden ist; und

   ii) einen Schalter (MUX 10) zum selektiven Verbinden des Bezugskondensators (C101) und des Eingangskondensators (Cap32) mit dem Eingang der invertierenden verstärkenden Einrichtung (I101, I102, I103).

4. Sensorschaltung, umfassend:

   i) eine erste Sensorschaltung (Cap32, I121-123, C121) nach Anspruch 1;

   ii) eine zweite Sensorschaltung, enthaltend:

   a) einen aus einer ungeraden Anzahl von CMOS-Invertern (I124, I125, I126) bestehenden zweiten invertierenden Verstärker;

   b) einen zweiten Rückkopplungskondensator (C122) zum Verbinden des Ausgangs des zweiten invertierenden Verstärkers mit dessen Eingang; und

   c) einen zweiten Eingangskondensator (Cref), der mit dem Eingang des zweiten invertierenden Verstärkers verbunden ist;

   wobei eine gemeinsame Eingangsspannung mit den Eingangskondensatoren (Cap32, Cref) der ersten und zweiten Sensorschaltungen verbunden ist, und
   der Eingangskondensator (Cref) der zweiten Sensorschaltung ein Bezugskondensator ist.

5. Sensorschaltung zum Erzeugen entgegengesetzter charakteristischer Veränderungen an einem ersten und an einem zweiten Kondensator und elektrisches Detektieren der Veränderungen, umfassend:

   i) eine erste Sensorschaltung (Cap31, I511-I513, CF51) nach Anspruch 1 oder 2;

   ii) eine zweite Sensorschaltung (Cap32, I531-I533, CF53) nach Anspruch 1 oder 2;

   iii) einen ersten Zwischenkondensator (CC51), der mit dem Ausgang der ersten Sensorschaltung verbunden ist;

   iv) eine dritte invertierende Verstärkungseinrichtung mit einem eine ungerade Anzahl von CMOS-Invertem (I521, I522, I523) umfassenden dritten invertierenden Verstärker, welcher, die mit dem Zwischenkondensator (CC51) verbunden ist, und einen dritten Rückkopplungskondensator (CF52) zum Verbinden des Ausgangs des dritten invertierenden Verstärkers mit seinem Eingang;

v) eine kapazitive Kopplung (CC53, CC52) zum Integrieren des Ausgangssignal der zweiten Sensorschaltung und des Ausgangssignals der dritten invertierenden verstärkenden Einrichtung mittels eines parallelen Kondensators; und

vi) eine vierte invertierende Verstärkungseinrichtung mit einem eine ungerade Anzahl von CMOS-Invertern (I541, I542, I543) aufweisenden vierten invertierenden Verstärker, der mit dem Ausgang der kapazitiven Kopplung verbunden ist, und mit einem vierten Rückkopplungskondensator (CF54) zum Verbinden des Ausgangs des vierten invertierenden Verstärkers mit seinem Eingang.

6. Sensorschaltung zum Detektieren charakteristischer Veränderungen als ein Kapazitätswert, umfassend:

i) eine erste Sensorschaltung nach Anspruch 1 oder 2;

ii) eine Kapazitätskopplung zum Integrieren des Ausgangssignals eines ersten Kopplungskondensators (CC61, CC71), der mit dem Ausgang der ersten Sensorschaltung verbunden ist, und eines zu dem ersten Kopplungskondensator (CC61, CC62) parallelen und mit dem Eingang des ersten Kondensators (Cap31) verbundenen zweiten Kopplungskondensators (CC62, CC72); und

iii) eine zweite invertierende Verstärkungseinrichtung mit einem eine ungerade Anzahl von CMOS-Invertern (I621-I623, I721-I723) aufweisenden zweiten invertierenden Verstärker, der, der mit dem Ausgang der kapazitiven Kopplung verbunden ist, und mit einen Rückkopplungskondensator (CF62, CF72) zum Verbinden des Ausgangs des zweiten invertierenden Verstärkers mit seinem Eingang.

**Revendications**

1. Circuit de capteur comprenant :

i) un amplificateur inverseur consistant en un nombre pair d'inverseurs CMOS (181, 182, 183) ;
ii) un condensateur de réaction (C8) pour connecter la sortie dudit amplificateur inverseur à son entrée ; et
iii) un condensateur d'entrée (Cap32) connecté à l'entrée dudit amplificateur inverseur, dans lequel ledit condensateur d'entrée (Cap32) est un capteur capacitif.

2. Circuit de capteur selon la revendication 1, dans lequel ledit condensateur de réaction et ledit condensateur d'entrée sont des capteurs capacitifs.

3. Circuit de capteur selon la revendication 1, comprenant en outre :

i) un condensateur de référence (C101) connecté audit amplificateur inverseur (1101, 1102, 1103) parallèle audit condensateur d'entrée (Cap32) ; et
ii) un commutateur (Mux10) pour connecter de façon sélective ledit condensateur de référence (C101) et ledit condensateur d'entrée (Cap32) à l'entrée dudit moyen amplificateur inverseur (1101, 1102, 1103).

4. Circuit de capteur comprenant :

i) un premier circuit de capteur (Cap32, 1121-123, C121) selon la revendication 1 ;
ii) un second circuit de capteur comprenant :

a) un second amplificateur inverseur consistant en un nombre impair d'inverseurs CMOS (1124, 1125, 1126) ;
b) un second condensateur de réaction (C122) pour connecter la sortie dudit second amplificateur inverseur à son entrée ; et
c) un second condensateur d'entrée (Cref) connecté à l'entrée dudit second amplificateur inverseur ;

dans lequel une tension d'entrée commune est connectée auxdits condensateurs d'entrées (Cap32, Cref) desdits premier et second circuits de capteur, et ledit condensateur d'entrée (Cref) du second circuit de capteur est un condensateur de référence.

5. Circuit de capteur pour délivrer des modifications de caractéristiques inverses à un premier et à un second condensateur, et détecter électriquement lesdites modifications, comprenant :

   i) un premier circuit de capteur (Cap31, 1511-1513, CF51) selon la revendication 1 ou 2 ;
   ii) un second circuit de capteur (Cap32, 1531-1533, CF53) selon la revendication 1 ou 2 ;
   iii) un premier condensateur intermédiaire (CC51) connecté à la sortie dudit second circuit de capteur;
   iv) un troisième moyen d'amplification inversion doté d'un troisième amplificateur inverseur comprenant un nombre impair d'inverseurs CMOS (1521, 1522, 1523) connecté audit condensateur intermédiaire (CC51), et un troisième condensateur de réaction (CF52) pour connecter la sortie dudit troisième amplificateur inverseur à son entrée ;
   v) un couplage capacitif (CC53, CC52) pour intégrer la sortie dudit second circuit de capteur et la sortie dudit troisième moyen d'amplification inversion au moyen d'un condensateur parallèle ; et
   vi) un quatrième moyen d'amplification inversion doté d'un quatrième amplificateur inverseur comprenant un nombre impair d'inverseurs CMOS (1541, 1542, 1543) connecté à la sortie dudit couplage capacitif, et un quatrième condensateur de réaction (CF54) pour connecter la sortie dudit quatrième amplificateur inverseur à son entrée.

6. Circuit de capteur pour détecter des modifications de caractéristiques comme une valeur de capacitance, comprenant :

   i) un premier circuit de capteur selon la revendication 1 ou 2 ;
   ii) un couplage capacitif pour intégrer la sortie d'un premier condensateur de couplage (CC61, CC71) connecté à la sortie dudit premier circuit de capteur et un second condensateur de couplage (CC62, CC72) parallèle audit premier condensateur de couplage (CC61, CC71) et connecté à l'entrée dudit premier condensateur (Cap 31) ; et
   iii) un second moyen d'amplification inversion doté d'un second amplificateur inverseur comprenant un nombre impair d'inverseurs CMOS (1621-1623, 1721-1723) connecté à la sortie dudit couplage capacitif et un condensateur de réaction (CF62, CF72) pour connecter la sortie dudit second amplificateur inverseur à son entrée.

S 1 1

S 1 2

S 1 n

AMP

SIG11

SIG12

SIG1n

## FIG. 1

S 1 1

Z 2

AMP

Vout

## FIG. 2

S 1 2

Z 3 1

AMP

Vout

Z 3 2

## FIG. 3

13

FIG. 4

FIG. 5

FIG. 6

FIG. 7

FIG. 8

FIG. 9

FIG. 10

FIG. 11

FIG. 12

FIG. 13

FIG. 14

FIG. 15

EP 0 816 805 B1

FIG. 16

FIG. 17

FIG. 18

FIG. 19

FIG. 20

FIG. 21

FIG. 22

FE 1

C 1

ME

C 2

FE 2

FIG. 23

SW 1

C 1

C 2

SW 2

TC

I A 1

R 1

I A 2

CNT

R 2

Vo

C 3

FIG. 24

1

R 1

C 2

R 2

DA

Maximal
Signal Amplitude
Holding Circuit

Amplifier/
Indicating Circuit

Reset Pulse
Generating Circuit

Pulse Generating Circuit